# NEW EUROPEAN PATENT SPECIFICATION

(11) **EP 3 169 568 B2**
(45) Date of publication and mention of the opposition decision: **12.01.2022**
(45) Mention of the grant of the patent: 18.04.2018
(21) Application number: 15732713.1
(22) Date of filing: 30.06.2015
(51) Int. Cl.: B60S 1/52, B60S 1/56, B60R 11/04, G02B 27/00

(54) **INTEGRATED ON BOARD VEHICLE VISION AND CLEANING SYSTEM**
INTEGRIERTES SICHT- UND REINIGUNGSSYSTEM AN BORD EINES FAHRZEUGS
SYSTÈME DE VISION ET DE NETTOYAGE DE VÉHICULE EMBARQUÉ INTÉGRÉ

(30) Priority: 16.07.2014 DE 102014010495
(43) Date of publication of application: 24.05.2017
(73) Proprietor: Kautex Textron GmbH & Co. KG, 53229 Bonn (DE)
(72) Inventor: DAVIES, Chris, Cardiff Wales CF15 8LS (GB); WILLIAMS, Aaron, South Glamorgan Wales CF23 5BB (GB)
(74) Representative: Richly & Ritschel Patentanwälte PartG mbB
(86) International application number: PCT/EP2015/064879
(87) International publication number: WO 2016/008722

(56) References cited:
- EP-A1- 2 845 773
- WO-A1-02/072274
- WO-A1-2012/138455
- WO-A1-2013/101430
- WO-A1-2016/008722
- WO-A2-2008/087320
- CN-U- 201 923 085
- DE-A1- 2 209 122
- DE-A1-102008 008 656
- DE-A1-102010 041 475
- DE-A1-102011 106 957
- DE-B3-102014 010 495
- DE-B4- 10 059 786
- FR-A1- 2 679 506
- FR-A1- 2 933 925
- JP-A- 2009 067 341
- JP-A- 2012 175 359
- JP-A- 2015 047 900
- JP-U- S6 061 959
- KR-A- 20070 022 480
- KR-A- 20120 130 384
- US-A1- 2015 040 953

## Description

The invention refers to an integrated on board vehicle vision and cleaning system comprising an image sensor unit, a cleaning fluid source, a cleaning fluid circuit, a cleaning fluid pump and at least one cleaning fluid nozzle.

Modern vehicles, and particularly automobiles, mostly so-called SUV's are provided with external view cameras to enhance the driver's vision and to improve safety. Moreover, these cars are often equipped with sensors, which detect approaching and passing cars from behind, which are not visible to the driver in the rear mirrors due to the blind angle, and are not covered by the rear view mirrors.

In the prior art, rear view cameras are often integrated into the rear bumper, the hatch or luggage compartment door of the vehicle nearby the licence plate. Due to that position at the car body, camera lenses or protective lens covers, or generally speaking, the sensor coverage are exposed to the vehicle's surroundings and dirt and debris, mud, salt spray etc. accumulate on the lens, or a lens cover or a sensor cover during operation of the vehicle. Particularly, if cameras and/or sensors are integrated in the rear bumper or in the hatch of the vehicle, they are particularly exposed to dirt and mud spray.

Therefore, it is generally known to provide external washing systems for cleaning lenses and sensors.

For example, WO 2012/138455 A1 discloses an external lens washing system for a rear view camera.

Prior art related to such lens washing systems may for example also be taken from WO 01/68425 A1, WO 02/072274 A1, and DE 10 2010 022 163 A1.

Various cleaning concepts have been proposed in the art, either in order to prevent build-up of dirt and debris on the camera lens or to achieve an enhanced cleaning result. As also droplets from residual cleaning fluid on the camera lens deteriorates the external view, for example WO 02/072274A1 proposes fluid and air nozzle assemblies, which are capable of propelling streams of a cleaning fluid and an air mixture onto a vehicle vision device, visible indicator or sensor in order to address this issue. These nozzle assemblies are mounted on a vehicle adjacent to the vehicle vision device and are positioned such that liquid from one type of nozzle and air jets from another type of nozzle intersect prior to impinging upon the vehicle vision device in order to form a spray mixture that cleans the exposed surface of the vehicle's vision device. JP-A-2012-175359 shows the preamble of claim 1. Generally, in the prior art it has not been considered that also build-up of dirt and debris, mud, salt spray etc. on the nozzles might be an issue, since the nozzles might get clogged. Another issue with such arrangement of nozzles is that in order to achieve a proper cleaning effect, the nozzles have to be arranged pretty close to the lens cover or to the lens dome. This is not only because of the cleaning effect, but also due to the desire to provide integrated systems, i.e. the camera system and the cleaning system in one assembly.

Yet another issue with such systems is that the external viewing angle should be as wide as even possible. Such wide angle rear view system advantageously also covers at least a part of the rear bumper such that a parking distance indication may be easily provided to the driver. The demand for such wide angle lens systems and for nozzles being placed very close to the lens or lens cover is to some extend conflicting as with rear view cameras it might happen that the nozzles are also covered by the viewing angle of the sensor unit. If a visible image is displayed on a screen within the passenger compartment, the nozzles might be optically distracting.

It is thus an object of the present invention to provide an integrated on board vehicle vision and cleaning system, which overcomes the above-referred drawbacks.

These and other objects are achieved by an integrated on board vehicle vision and cleaning system according to claim 1.

Advantageous embodiments and variations of the inventive concept may be taken from the dependent claims.

In accordance with the present invention an integrated on board vehicle vision and cleaning system is provided, the system comprising:
- an image sensor unit,
- a cleaning fluid source,
- a cleaning fluid circuit,
- a cleaning fluid pump,
- at least one cleaning fluid nozzle,
- the image sensor unit being arranged in an image sensor housing,
- the image sensor housing being arranged in a vehicle body-mounted casing,
- the image sensor housing being moveable within the casing between first and second positions,
- the first position being an extended position, where the image sensor housing projects from an external vehicle body surface,
- the second position being a retracted position, where the image sensor housing is retracted below the external vehicle body surface,
- the cleaning fluid nozzle being arranged below the external vehicle body surface and aiming inwardly into the casing, so that the cleaning fluid as a jet or a spray of fluid may be propelled onto the image sensor housing, thus, ultimately cleaning a sensor coverage while the image sensor housing is in the second retracted position.

In other words, the invention aims to maintain a clear vision of the sensor unit by moving the sensor unit below the vehicle's external surface, then cleaning it with fluid by the use of at least one nozzle, thereby removing any built-up of dirt/debris obstructing the user's view, and then moving the sensor unit back in an elevated position above the vehicle's external surface.

The system has also been designed to clear any build up of frost on the camera during cold conditions.

If the sensor unit includes a dome-shaped lens cover, the peripheral rim of the image sensor housing may flush with a vehicle's external surface in the first position, while the dome projects above the vehicle's external surface.

According to that concept of the invention, the nozzle or several nozzles are generally arranged in a concealed fashion, so that the nozzle or the nozzles are not exposed in the first position of the image sensor housing.

A sensor unit in the sense of the present application may be for example an external view camera or just a sensor for detecting approaching and passing cars or even for creating a lane departure warning signal.

A sensor unit in the sense of the present application also may be designed as an external view camera as well as a sensor at the same time to generate a lane departure warning to the driver or to detect objects approaching the vehicle, which are normally not visible in the rear view mirrors.

A sensor unit according to the present invention may be an imaging device using solid state technologies, for instance CMOS or CCD Pixle Sensor Technology in combination with for instance a video monitor display for automotive navigation systems. The image sensor unit may comprise a camera lens system with at least one lens surface or cover surface.

A fluid nozzle within the sense of the present application may be a fluidic oscillator, a pencil jet nozzle or the like. The fluid nozzle may have an adjustable eyeball nozzle body.

A fluid nozzle in the sense of the present application may also be an air nozzle, which may also be any type of nozzle through which an air jet, preferably a pencil jet may be ejected.

A cleaning fluid in the sense of the instant application may be a liquid as well as gas or air. A cleaning fluid pump according to the invention may be a conventional type fluid pump, particularly a conventional type impeller pump with one or several impeller wheels. The fluid pump may have one or more fluid exit ports and at least one fluid entry port receiving a liquid cleaning fluid from a cleaning fluid source. In the event air or gas is to be propelled onto the sensor unit, the cleaning fluid pump may be designed as a piston pump.

In the event the cleaning fluid pump is designed as a conventional type impeller pump for a liquid cleaning fluid, the cleaning fluid pump may be either designed as a dual pump with a switchable sense of rotation or a mono pump with only one sense of rotation.

Particularly, a cleaning fluid pump with a switchable sense of rotation may deliver liquid cleaning fluid to different nozzle systems in dependence of the sense of rotation actually chosen.

A cleaning fluid circuit in the sense of the current application may include a cleaning fluid conduit or cleaning fluid hoses as well as connectors, and valves, i.e. check valves and/or pressure-retaining valves.

A cleaning fluid circuit in the sense of the present application does not necessarily have to be a closed circuit. A person skilled in the art will appreciate that the term "cleaning fluid circuit" includes also only a single cleaning fluid conduit from the cleaning fluid pump to a fluid nozzle. A cleaning fluid circuit must not necessarily be and normally is not a closed loop.

In one advantageous embodiment according to the invention, the image sensor housing is hydraulically rectracted below the vehicle's external surface from the first position into said second position. It is particularly advantageous if such movement from the first position into the second position is achieved by the hydraulic force of the cleaning fluid.

The image sensor housing and the casing engage each other such that they define a sealed fluid chamber, and the fluid chamber communicates with the cleaning fluid circuit, so that the cleaning fluid is provided under pressure to the fluid chamber.

For example, the bottom of the fluid chamber may be formed by a part of the image sensor housing so that the cleaning fluid pressure forces the image sensor housing into the second retracted position.

The image sensor housing is biased in the first position by the biasing force of a spring element, and the image sensor housing is being forced into the second position by the pressure of the cleaning fluid entering the cleaning fluid chamber.

Preferably, the cleaning fluid chamber and said nozzle are hydraulically connected in parallel to the cleaning fluid pump.

The fluid pressure delivered by the cleaning fluid pump may be in the order of 2 to 5 bar, more preferably about 3 bar depending on the pressure consumption of the nozzle, or an arrangement of several nozzles.

In order to achieve a sequential operation of the hydraulically actuated motion of the image sensor housing and the propulsion of cleaning fluid to the fluid nozzle, the system may comprise one or more pressure retaining valves. For example if one nozzle is provided, the system comprises a pressure retaining valve upstream said nozzle, so that cleaning fluid is only delivered to the nozzle if the pressure built-up in the cleaning fluid chamber raises above a give value, which should be the case if the image sensor housing reaches its second position.

Preferably, the moving pressure in the cleaning fluid chamber, the pressure within the fluid chamber effecting a movement of the image sensor housing, is lower than the moving pressure of a valve body in said pressure retaining valve. Alternatively, the system may be designed such that said cleaning fluid chamber and said nozzle are hydraulically connected in series, that is to say in line, and in that cleaning fluid is discharged from said nozzle only when said image sensor housing reaches said second position.

In this event, said fluid nozzle may be covered by said image sensor housing itself in the first position, and said fluid nozzle may be uncovered and released by the image sensor housing itself in the second position.

For example, said nozzle may be formed by a nozzle duct which is integrated in the casing or which is part of the casing, the duct communicating with said fluid chamber by a bypass channel, which is closed in said first position of the image sensor housing, and which is open in said second position of said image sensor housing. The bypass channel may be hermetically closed by the image sensor housing itself in the first position.

The image sensor housing and/or casing may be provided with one or more sealing elements, for instance in the form of elastomeric sealing rings.

Generally, the image sensor housing may have a cylindrical cross-section. In that event, the casing also has a cylindrical cross-section, so that the image sensor housing defines a piston, whereas the casing defines the corresponding cylinder.

The image sensor housing may be designed as a cylindrical piston with an open bottom facing away from the external vehicle body surface. In that event the fluid chamber may be designed as an annular chamber formed by an annular space between the cylindrical casing and the image sensor housing.

Alternatively, the image sensor housing may include a piston rod and a piston surface, the later advantageously forming the bottom of the cleaning fluid chamber.

In one advantageous embodiment of the integrated on board vision and cleaning system according to the invention, the fluid nozzle (one or more fluid nozzles) is integrated in a connector for a cleaning fluid conduit, the connector being inserted in a opening of the casing or the connector being integral with the casing.

"Integrated" in that sense does not necessarily mean that the fluid nozzle and the connector are in one piece. The fluid nozzle may be for example designed as an eyeball snap-fitted into a corresponding compartment of the connector. The connector may be in the form of a fitting with a fir-tree profile.

Generally, the integrated on board vision and cleaning system according to the current application may be vehicle-mounted such that a lens dome or a dome-shaped lens cover faces slightly downwardly in the mounting position, so that surplus cleaning fluid may automatically be drained by gravity. As already mentioned, the system may also include at least one air nozzle in order to blow away surplus cleaning fluid.

Alternatively, or additionally, the system may include additional draining means for draining surplus cleaning fluid eventually collecting on the image sensor housing.

The system preferably includes at least two cleaning fluid nozzles arranged equally spaced apart at the periphery of the casing. The fluid nozzles are preferably facing or aiming radially inward into the inside of the casing.

As already mentioned, the image sensor housing may include a lens dome covering or even constituting a wide angle lens of the image sensor unit. The angle of view might be between 90° and 180°. A skilled person in the art will appreciate that the angle of view which as actually being displayed on the video monitor display inside the car in the end depends on the aspect ratio of the monitor display.

The invention hereinafter will be described by way of example with reference to the accompanying drawings in which:
- Figure 1: shows a schematic view of the integrated on board vehicle vision and cleaning system according to the invention,
- Figure 2: shows an enlarged cross-sectional view of the on board vehicle vision and cleaning system as mounted in a vehicle body without the cleaning fluid circuit, the image sensor housing being arranged in the first elevated position.
- Figure 3: a cross-sectional view corresponding to the view of Figure 2, where the image sensor housing is in the second retracted position,
- Figure 5: a side view of the casing not mounted in the vehicle body and including the image sensor housing with the image sensor unit,
- Figure 6: a side view of the casing as shown in Figure 5 turned clockwise 45°
- Figure 7: a perspective view of the casing according to Figures 5 and 6,
- Figure 8a: a cross-sectional view of a second embodiment of the integrated on board vehicle vision and cleaning system according to the invention, where the image sensor housing is in the first extended position,
- Figure 8b: a cross-sectional view corresponding to that of Figure 8a, where the image sensor housing is in the second retracted position,
- Figure 9: a partial cross-sectional view of a modification of the embodiment according to Figures 8a and 8b, where the image sensor housing is in the first position, and
- Figure 10: a partial cross-sectional view corresponding to that of Figure 9, where the image sensor housing is in the second retracted position.

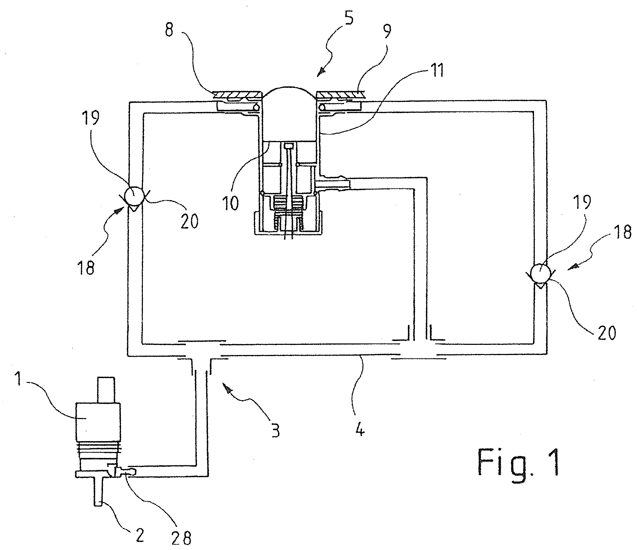

Turning now to figure 1, which shows the whole integrated on board vehicle vision and cleaning system, reference numeral 1 designates a cleaning fluid pump, which is designed as a conventional mono-directional impeller pump and delivers fluid from a cleaning fluid source not shown via suction port 2 into a cleaning fluid circuit 3. The cleaning fluid circuit 3 as shown is only a simple cleaning fluid conduit 4 for cleaning fluid delivery to a rear view camera 5 with integrated cleaning system. However, the cleaning fluid circuit 3 as shown in figure 1 could be part of a complex system also delivering cleaning fluid to other windshield or headlamp cleaning devices at a motor vehicle like a passenger car or the like.

Hereinafter the vehicle vision device including a sensor unit 6 for the sake of simplicity is referred to as the rear view camera 5.

The rear view camera 5 is mounted in an opening 7 of a vehicle body 8. The vehicle body 8 may be part of a bumper of a passenger car or of a hatch of a passenger car. The vehicle body 8 has an external vehicle body surface 9, which is exposed to ambient atmosphere.

To be more specific, the system includes an image sensor housing 10 being arranged in a vehicle body mounted casing 11. The image sensor housing 10 houses the image sensor unit 6 for instance comprising a CCD or CMOS Sensor and an optical system, for example a lens.

The image sensor housing 10 includes a translucent lens dome 13 facing outwardly, i.e. defining the sensor or camera coverage.

The image sensor unit 6 may be arranged within the image sensor housing 10 in a sealed fashion. The image sensor housing 10 itself is water-proof. Reference numeral 14 designates the wire to and from the image sensor unit 6, the wire 14 connecting the image sensor unit 6 to on board electronics of the passenger car.

The image sensor housing 10 according to the embodiment as shown in figure 1 and figures 2 and 3 includes three connectors 15a, b, c designed as fittings with a fir-tree profile in order to receive hoses of the cleaning fluid circuit 3.

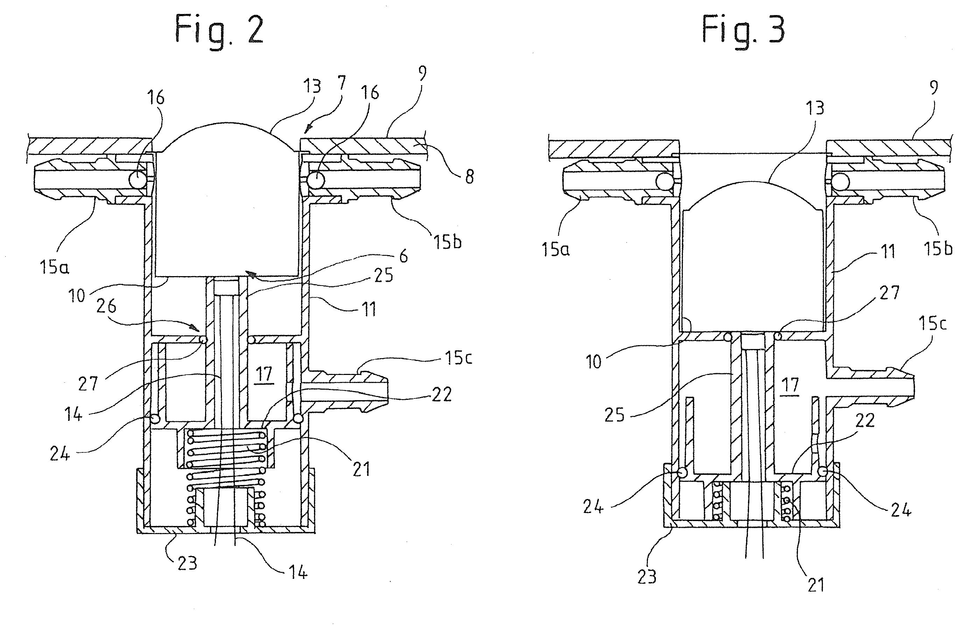

In the embodiment as shown in figures 2 and 3, the connectors 15a and 15 b are inlet connectors which do not form an integral part of the casing 11, but are snap-fitted in receiving openings of the casing 11. The inlet connector 15c,however, is an integral part of the casing 11. Connectors 15a and 15b at their ends facing inwardly into the casing 11 are provided with fluid nozzles 16, which are designed as eyeball nozzles. Again, a person skilled in the art will appreciate that the fluid nozzles may have any appropriate design. The fluid nozzles 16 are arranged on opposite sides of the casing 11 at an equal distance from each other, and the fluid nozzles are aiming radially inwardly into the casing 11. The connector 15c opens into a fluid chamber 17 defined by the casing 11, and the image sensor housing 10 as explained in more detail hereinafter.

As this is shown in figure 1 connectors 15a, b are each connected to the cleaning fluid circuit 3 and are thus in fluid communication with the cleaning fluid pump 1. Connector 15c is also connected to the cleaning fluid circuit 3 or likewise to the cleaning fluid conduit 4, such that the fluid chamber 17 and the fluid nozzles 16 are hydraulically arranged in parallel.

Moreover, in the cleaning fluid conduit 4 upstream of the fluid nozzles 16, there are arranged two pressure retaining valves 18 including a valve body 19, which can be lifted from associated valve seat 20 by the pressure of the cleaning fluid, which is actually in the embodiment as described a cleaning liquid. The valve body 19 is held in the valve seat 20, for example by a spring, which is not shown.

Again, turning to figures 2 and 3, the image sensor housing 10 is moveable back and forth from the first position shown in figure 2 in the second position shown in figure 3 by the hydraulic pressure of the cleaning fluid produced by the cleaning fluid pump 1.

In the position shown in figure 2, the image sensor housing 10 is held in its extended position, i.e. in the position where the lens dome 13 projects from the external vehicle body surface 9, by a coil spring 21 arranged between a cup-shaped piston 22 forming an integral part of the image sensor housing 10 and a closure cap 23 fitted on the open end of the image sensor housing 10 facing away from the external vehicle body surface 9. The piston 22 forms the bottom of the fluid chamber 17 and is sealed relative to the casing 11 by an O-ring seal 24 extending externally at the periphery of the piston 22. The piston 22 has a piston rod 25 guided through a lead-through 26 of the casing 11.

Again, the piston rod 25 is sealed in the lead-through 26 by another O-ring seal 27. The seals, of course, could be any type of seal.

The function of the integrated on board vehicle vision and cleaning system according to the first embodiment as shown in figures 2 and 3 is as follows:
The cleaning fluid pump 1 which delivers at a fluid exit port 28 a liquid cleaning fluid with a pressure of 3 to 5 bar pumps the cleaning fluid from the cleaning fluid source into the cleaning fluid conduit 4 towards the fluid nozzles 16 and towards the fluid chamber 17 at the same time. The system preferably operates between 2 to 5 bar, but could operate below 2 or above 5 bar. The pressure retaining valves 18 at that time are closed. The pressure retaining valves 18 will open at a fluid pressure of about 1.5 to 2.5 bar. Optimum valve opening pressure is 1 to 2 bar, but could be below 1 bar or above 2 bar.

The spring constant of the coil spring 21 is chosen such that pressurizing in the fluid chamber 17 by a static pressure of the cleaning fluid of about 0.5 to 1.5 bar, preferably 0,8 barwill be sufficient to move the image sensor housing 10 against the biasing force of the coil spring 21 into the position as shown in figure 3. In that position, the fluid nozzles 16 are exposed. Once the image sensor housing 10 has reached its second retracted position as shown in figure 3, the pressure within the fluid chamber 17 will raise further, so that the valve body 19 of the pressure retaining valves 18 will be lifted from its associated valve seat 20 and thus cleaning fluid will be delivered to the fluid nozzles 16 which then are exposed. The fluid nozzles 16 provide a jet, spray or oscillating jet onto the lens dome 13, thus removing any dirt and debris, which might have collected on the lens dome 13. After such a cleaning cycle has been performed, the image sensor housing 10 will automatically return to its position as shown in figure 2.

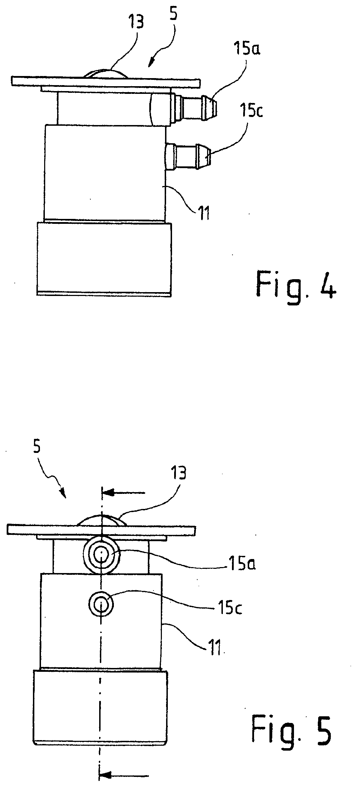

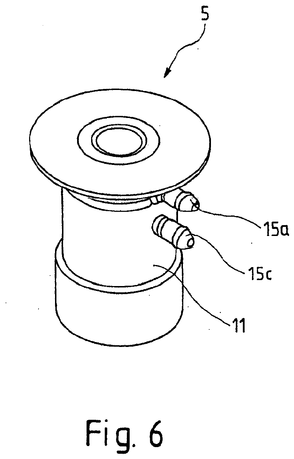

Figures 5 to 7b show a second embodiment of the integrated on board vehicle vision and cleaning system according to the present invention. Same parts are denoted by the same reference numerals.

For the sake of simplicity, hereinafter it will be referred only to the differences between the two embodiments.

First of all, the casing 11 has only two connectors 15a, 15c, since the fluid nozzles 16 are integrated into the casing and may be simply provided as slots 29 in the casing 11. The casing 11 may have an annular space forming a liquid distribution chamber opening into several slots 29. Alternatively, only one slot may be present. The connectors could either be integrated or assembled as separate parts.

Moreover, the image sensor housing 10 is designed as an open-ended cylinder forming with the casing 11 an annular space defining the fluid chamber 17. The annular space is sealed by two axially opposing sealing rings 30, each sealing ring 30 having two flexible sealing legs 31. The sealing rings 30 have a kind of V-profile and are arranged such that the open sides of the profile are facing each other with the result that the fluid entering the fluid chamber will force the sealing legs 31 against an inner cylindrical wall of the casing 11, thus, providing proper sealing. The V-type seal could also be replaced by other types of seals including O-rings. V-type is the preferred seal.

It is to be understood that in all of the embodiments shown herein the casing 11 and the image sensor housing 10 are cylindrical parts, even though they may have another geometry.

The advantage of the solution shown in the second embodiment vis-à-vis the solution shown in the first embodiment is that the image sensor unit 6 may be inserted from the open end of the image sensor housing 10 into the later, i.e. from the side facing away from the external vehicle body surface 9.

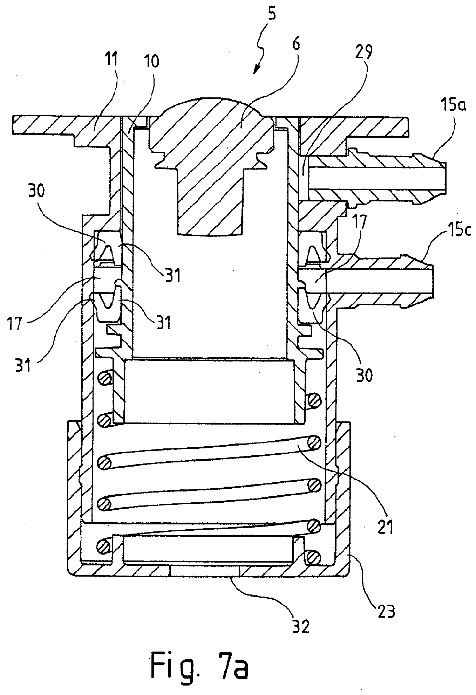

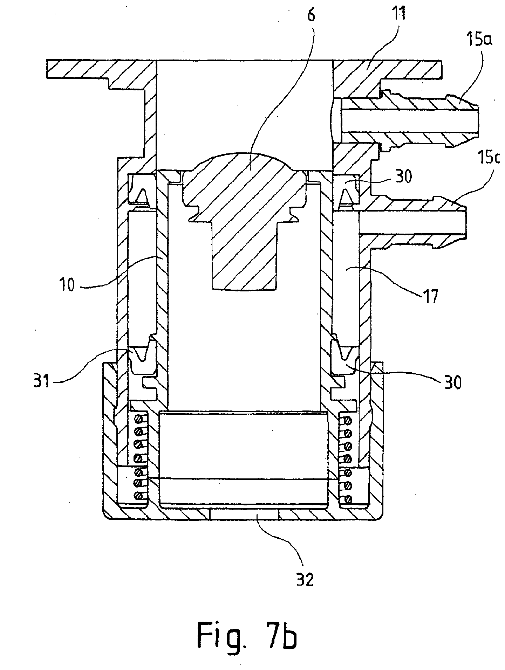

Figure 7a shows the image sensor housing 10 in the first position, whereas in figure 7b the image sensor housing 10 is in the second position, in which the coil spring 21 is compressed.

In both embodiments the wire 14 connecting the image sensor unit 6 is not shown. For guiding the wire to the onboard electronics, there is a lead-through 32 in the closure cap 23.

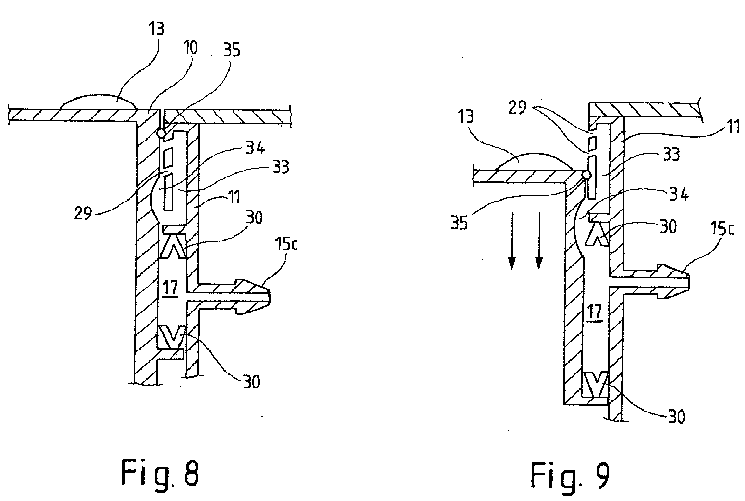

Figure 8 and 9 show slight modifications of the embodiment according to figure 4 to 7b.

For the sake of simplicity, in figures 8 and 9 only partial views are shown. Also in this embodiment, the fluid nozzles 16 are integral part of the casing 11 and these fluid nozzles are formed by slots 29 in the wall of an annular space 33 of the casing 11. In this embodiment, the fluid nozzles and the fluid chambers 17 are connected in series, so that in this embodiment a slightly modified cleaning fluid circuit 3 may be present, i.e. other than shown in figure 1. As a person skilled in the art will appreciate, in the embodiment according to figures 8 and 9 the cleaning fluid circuit 3 may be simplified in that the pressure retaining valves 18 may be omitted and only one single one way cleaning fluid conduit 4 may be connected to only one single connector 15a. The fluid chamber 17 in one position of the image sensor housing 10 communicates with the annular space 33 via a bypass channel 34.

At the beginning of the cleaning cycle again the image sensor housing 10 is in the position as shown in figure 1. In this position, the image sensor housing 10 covers the slots 29, the annular space 33 communicating with the slots 29. The fluid nozzle is sealed relative to the fluid chamber 17, which is also designed as an annular space, by the upper sealing ring 30 as well as by another O-ring sealing 35 of the upper end of the image sensor housing 10.

As cleaning fluid enters the fluid chamber via the connector 15c opening into the fluid chamber 17, the image sensor housing 10 moves into the retracted position (second position) as shown in figure 9, thereby opening the bypass channel 34 and allowing the cleaning fluid to also enter the annular space 33 and to be propelled onto the lens dome 13 through the slots 29.

Once the cleaning fluid pump 1 is deactivated, the image sensor casing moves back into the position as shown in figure 9, thereby closing the slots 29 and the bypass channel 34.

A person skilled in the art will appreciate that in the inwardly facing wall of the annular space 33, several slots at equal distance at the circumference of the cylinder defined by the casing 11 may be provided.

### Reference numerals

- 1: cleaning fluid pump
- 2: suction port
- 3: cleaning fluid circuit
- 4: cleaning fluid conduit
- 5: rear view camera
- 6: sensor unit
- 7: opening
- 8: vehicle body
- 9: external vehicle body surface
- 10: image sensor housing
- 11: casing
- 13: lens dome
- 14: wire
- 15a, b, c: connectors
- 16: fluid nozzles
- 17: fluid chamber
- 18: pressure retaining valves
- 19: valve body
- 20: valve seat
- 21: coil spring
- 22: piston
- 23: closure cap
- 24: O-ring seal
- 25: piston rod
- 26: lead through
- 27: O-ring seal
- 28: fluid exit port
- 29: slots
- 30: sealing ring
- 31: sealing legs
- 32: lead through
- 33: annular space
- 34: bypass channel
- 35: O-ring seal

## Claims

1. Integrated on board vehicle vision and cleaning system comprising:
- an image sensor unit (6),
- a cleaning fluid source,
- a cleaning fluid circuit (3) or at least one cleaning fluid conduit (4),
- a cleaning fluid pump (1),
- at least one cleaning fluid nozzle (16),
the image sensor unit (6) being arranged in an image sensor housing (10), the image sensor housing (10) being arranged in a vehicle body-mounted casing (11), wherein the image sensor housing (10) is moveable within the casing (11) between first and second positions,
the first position being an extended position, where the image sensor housing (10) projects from an external vehicle body surface (9),
the second position being a retracted position, where the image sensor housing (10) is retracted below the external vehicle body surface (9),
the cleaning fluid nozzle (16) being arranged below the external vehicle body surface (9) and aiming inwardly into the casing (11), so that the cleaning fluid as a jet, or a spray of fluid may be propelled onto the image sensor housing (10), thus, ultimately cleaning a sensor coverage while the image sensor housing (10) is in the second retracted position,
**characterized in that** the image sensor housing (10) and the casing (11) engage each other such that they define a sealed fluid chamber (17) and **in that** the fluid chamber (17) communicates with the cleaning fluid circuit (3), and **in that** the image sensor housing (10) is biased in the first position by the biasing force of a spring element and **in that** the image sensor housing (10) is being forced into the second position by the pressure of the cleaning fluid entering the cleaning fluid chamber (17).

2. Integrated on board vehicle vision and cleaning system according to claim 1, **characterized in that** the image sensor housing (10) is biased in the first position and is movable into the second position by the cleaning fluid pressure generated by the cleaning fluid pump (1) during a cleaning cycle.

3. Integrated on board vehicle vision and cleaning system according to claim 1, **characterized in that** the cleaning fluid chamber (17) and said fluid nozzle (16) are hydraulically connected in parallel to the cleaning fluid pump.

4. Integrated on board vehicle vision and cleaning system according to anyone of claims 1 to 3, **characterized in that** it comprises a pressure retaining valve (18) upstream said fluid nozzle (16).

5. Integrated on board vehicle vision and cleaning system according to claim 4, **characterized in that** the pressure retaining valve is constructed such that the moving pressure in the cleaning fluid chamber (17) is lower than the moving pressure of a valve body (19) in said pressure retaining valve (18).

6. Integrated on board vehicle vision and cleaning system according to anyone of claims 1 or 2, **characterized in that** said cleaning fluid chamber (17) and said fluid nozzle (16) are hydraulically connected in series and **in that** cleaning fluid is discharged from said fluid nozzle (16) only when said image sensor housing (10) reaches said second position.

7. Integrated on board vehicle vision and cleaning system according to claim 6, **characterized in that** said fluid nozzle (16) is covered and sealed by said image sensor housing (10) itself in the first position and **in that** said fluid nozzle (16) is uncovered and released by the image sensor housing (10) itself in the second position.

8. Integrated on board vehicle vision and cleaning system according to anyone of claims 6 or 7, **characterized in that** said nozzle (16) is formed by a nozzle duct of the casing (11) communicating with said fluid chamber (17) by a bypass channel (34), which is closed in said first position of the image sensor housing (10) and which is open in said second position of the image sensor housing (10).

9. Integrated on board vehicle vision and cleaning system according to anyone of claims 1 to 7, **characterized in that** the fluid nozzle (16) is integrated in a connector (15a, b) for connecting a cleaning fluid conduit (4), the connector (15a, 15b) being inserted in an opening of the casing (11) or the connector (15a, b) being integral with the casing (11).

10. Integrated on board vehicle vision and cleaning system according to anyone of claims 1 to 9, **characterized by** draining means for draining surplus cleaning fluid eventually collecting on the image sensor housing (10).

11. Integrated on board vehicle vision and cleaning system according to anyone of the claims 1 to 10, **characterized by** at least two cleaning fluid nozzles (16) arranged equally spaced apart at the periphery of the casing (11).

12. Integrated on board vehicle vision and cleaning system according to anyone of claims 1 to 11, **characterized in that** the image sensor housing (10) includes a lens dome (13) covering or constituting a wide angle lens of the image sensor unit (6).

## Patentansprüche

1. Fahrzeugintegriertes Sicht- und Reinigungssystem umfassend:
- eine Bildsensoreinheit (12),
- eine Reinigungsfluidquelle,
- einen Reinigungsfluidkreis (3) oder wenigstens eine Reinigungsfluidleitung (4),
- eine Reinigungsfluidpumpe (1),
- wenigstens eine Reinigungsfluiddüse (16),
wobei die Bildsensoreinheit (6) in einem Bildsensorgehäuse (10) angeordnet ist, das Bildsensorgehäuse (10) in einem fahrzeugmontierten Gehäuse (11) angeordnet ist,
wobei das Bildsensorgehäuse (10) innerhalb des Gehäuses (11) zwischen ersten und zweiten Stellungen bewegbar ist,
die erste Stellung eine ausgefahrene Stellung ist, in welcher das Bildsensorgehäuse (10) von einer äußeren Fahrzeugkarosserieoberfläche (9) hervorsteht,
wobei die zweite Stellung eine zurückgezogene Stellung ist, bei welcher das Bildsensorgehäuse (10) unter die äußere Fahrzeugkarosserieoberfläche (9) zurückgezogen ist, wobei die Reinigungsfluiddüse unterhalb der äußeren Fahrzeugkarosserieoberfläche (9) angeordnet ist und einwärts in das Gehäuse (11) zielt, so dass die Reinigungsflüssigkeit als Strahl oder Sprühnebel eines Fluids auf das Bildsensorgehäuse (10) befördert werden kann und so schließlich eine Sensorabdeckung reinigt, während sich das Bildsensorgehäuse in der zweiten zurückgezogenen Stellung befindet,
**dadurch gekennzeichnet, dass**
das Bildsensorgehäuse (10) und das Gehäuse (11) so zusammenwirken, dass sie eine abgedichtete Fluidkammer (17) definieren und dass die Fluidkammer (17) mit dem Reinigungsfluidkreis (3) kommuniziert und dass das Bildsensorgehäuse in der ersten Stellung durch die Vorspannkraft eines Federelements vorgespannt ist und dass das Bildsensorgehäuse (10) durch den Druck des in die Reinigungsfluidkammer (17) einströmenden Reinigungsfluids in die zweite Stellung bewegt wird.

2. Fahrzeugintegriertes Sicht- und Reinigungssystem nach Anspruch 1, **dadurch gekennzeichnet, dass** das Bildsensorgehäuse (10) in der ersten Stellung vorgespannt ist und durch den Druck des Reinigungsfluids erzeugt durch die Reinigungsfluidpumpe (1) während eines Reinigungszyklus in die zweite Stellung bewegbar ist.

3. Fahrzeugintegriertes Sicht- und Reinigungssystem nach Anspruch 1, **dadurch gekennzeichnet, dass** die Reinigungsfluidkammer (17) und die Fluiddüse (16) hydraulisch parallel mit der Reinigungsfluidpumpe (1) verbunden sind.

4. Fahrzeugintegriertes Sicht- und Reinigungssystem nach einem der Ansprüche 1 bis 3, **dadurch gekennzeichnet, dass** diese ein Druckhalteventil stromaufwärts der Fluiddüse (16) umfasst.

5. Fahrzeugintegriertes Sicht- und Reinigungssystem nach Anspruch 4, **dadurch gekennzeichnet, dass** das Druckhalteventil (18) so ausgebildet ist, dass der Bewegungsdruck in der Reinigungsfluidkammer (17) kleiner als der Bewegungsdruck eines Ventilkörpers (19) in dem Druckhalteventil (18) ist.

6. Fahrzeugintegriertes Sicht- und Reinigungssystem nach einem der Ansprüche 1 oder 2, **dadurch gekennzeichnet, dass** die Reinigungsfluidkammer (17) und die Fluiddüse (16) hydraulisch in Reihe geschaltet sind und dass Flüssigkeit von der Fluiddüse (16) nur abgegeben wird, wenn das Bildsensorgehäuse (10) die zweite Stellung erreicht.

7. Fahrzeugintegriertes Sicht- und Reinigungssystem nach Anspruch 6, **dadurch gekennzeichnet, dass** die Fluiddüse (16) durch das Bildsensorgehäuse (10) selbst in der ersten Stellung abgedeckt und abgedichtet wird und dass die Fluiddüse (16) durch das Bildsensorgehäuse (10) selbst in der zweiten Stellung freigelegt und freigegeben wird.

8. Fahrzeugintegriertes Sicht- und Reinigungssystem nach einem der Ansprüche 6 oder 7, **dadurch gekennzeichnet, dass** die Fluiddüse (16) durch einen Düsenkanal des Gehäuses (11) gebildet wird, der mit der Fluidkammer (17) über einen Bypasskanal (34) kommuniziert, der in der ersten Stellung des Bildsensorgehäuses (10) geschlossen ist und der in einer zweiten Stellung des Bildsensorgehäuses (10) geöffnet ist.

9. Fahrzeugintegriertes Sicht- und Reinigungssystem nach einem der Ansprüche 1 bis 7, **dadurch gekennzeichnet, dass** die Fluiddüse (16) in einen Verbinder (15a, 15b) zur Verbindung einer Reinigungsfluidleitung (4) integriert ist, wobei der Verbinder (15a, 15b) in eine Öffnung des Gehäuses (11) eingesetzt ist oder der Verbinder (15a, 15b) einstückig mit dem Gehäuse (11) ausgebildet ist.

10. Fahrzeugintegriertes Sicht- und Reinigungssystem nach einem der Ansprüche 1 bis 9, **gekennzeichnet durch** Mittel zur Drainage von überschüssigem Reinigungsfluid, das sich etwa auf dem Bildsensorgehäuse (10) ansammelt.

11. Fahrzeugintegriertes Sicht- und Reinigungssystem nach einem der Ansprüche 1 bis 10, **gekennzeichnet durch** wenigstens zwei Fluiddüsen (16), die mit gleichem Abstand zueinander am Umfang des Gehäuses (11) angeordnet sind.

12. Fahrzeugintegriertes Sicht- und Reinigungssystem nach einem der Ansprüche 1 bis 11, **dadurch gekennzeichnet, dass** das Bildsensorgehäuse (10) einen Linsendom (13) umfasst, der eine weitwinklige Linse der Bildsensoreinheit (6) abdeckt oder bildet.

## Revendications

1. Système de vision et de nettoyage de véhicule intégré embarqué comprenant :
- une unité de capteur d'images (6),
- une source de fluide de nettoyage,
- un circuit de fluide de nettoyage (3) ou au moins une conduite de fluide de nettoyage (4),
- une pompe à fluide de nettoyage (1),
- au moins une buse de fluide de nettoyage (16),
l'unité de capteur d'images (6) étant disposée dans un boîtier de capteur d'images (10), le boîtier de capteur d'images (10) étant disposé dans un caisson monté sur carrosserie de véhicule (11),
où le boîtier de capteur d'images (10) est mobile à l'intérieur du caisson (11) entre des première et deuxième positions,
la première position étant une position déployée, où le boîtier de capteur d'images (10) fait saillie depuis une surface externe de carrosserie de véhicule (9),
la deuxième position étant une position rétractée, où le boîtier de capteur d'images (10) est rétracté au-dessous de la surface externe de carrosserie de véhicule (9), la buse de fluide de nettoyage (16) étant disposée au-dessous de la surface externe de carrosserie de véhicule (9) et étant pointée vers l'intérieur dans le caisson (11), de telle sorte que le fluide de nettoyage sous forme de jet ou d'un aérosol de fluide peut être projeté sur le boîtier de capteur d'images (10), nettoyant ainsi finalement un couvercle de capteur pendant que le boîtier de capteur d'images (10) est dans la deuxième position rétractée,
**caractérisé en ce que** le boîtier de capteur d'images (10) et le caisson (11) s'enclenchent de telle sorte qu'ils définissent une chambre de fluide scellée (17) et **en ce que** la chambre de fluide (17) communique avec le circuit de fluide de nettoyage (3), et **en ce que** le boîtier de capteur d'images (10) est retenu dans la première position par la force de rappel d'un élément à ressort et **en ce que** le boîtier de capteur d'images (10) est poussé dans la deuxième position par la pression du fluide de nettoyage entrant dans la chambre de fluide de nettoyage (17).

2. Système de vision et de nettoyage de véhicule intégré embarqué selon la revendication 1, **caractérisé en ce que** le boîtier de capteur d'images (10) est retenu dans la première position et peut être déplacé dans la deuxième position par la pression de fluide de nettoyage générée par la pompe à fluide de nettoyage (1) pendant un cycle de nettoyage.

3. Système de vision et de nettoyage de véhicule intégré embarqué selon la revendication 1, **caractérisé en ce que** la chambre de fluide de nettoyage (17) et ladite buse de fluide (16) sont reliées hydrauliquement en parallèle à la pompe à fluide de nettoyage.

4. Système de vision et de nettoyage de véhicule intégré embarqué selon l'une quelconque des revendications 1 à 3, **caractérisé en ce qu'**il comprend une vanne à soupape (18) en amont de ladite buse de fluide (16).

5. Système de vision et de nettoyage de véhicule intégré embarqué selon la revendication 4, **caractérisé en ce que** la vanne à soupape est construite de telle sorte que la pression de déplacement dans la chambre de fluide de nettoyage (17) est inférieure à la pression de déplacement d'un corps de vanne (19) dans ladite vanne à soupape (18).

6. Système de vision et de nettoyage de véhicule intégré embarqué selon l'une quelconque des revendications 1 ou 2, **caractérisé en ce que** ladite chambre de fluide de nettoyage (17) et ladite buse de fluide (16) sont reliées hydrauliquement en série et **en ce que** du fluide de nettoyage est déchargé de ladite buse de fluide (16) uniquement quand ledit boîtier de capteur d'images (10) atteint ladite deuxième position.

7. Système de vision et de nettoyage de véhicule intégré embarqué selon la revendication 6, **caractérisé en ce que** ladite buse de fluide (16) est recouverte et scellée par ledit boîtier de capteur d'images (10) lui-même dans la première position et **en ce que** ladite buse de fluide (16) est découverte et libérée par le boîtier de capteur d'images (10) lui-même dans la deuxième position.

8. Système de vision et de nettoyage de véhicule intégré embarqué selon l'une quelconque des revendications 6 ou 7, **caractérisé en ce que** ladite buse (16) est formée par un conduit faisant buse du caisson (11) communiquant avec ladite chambre de fluide (17) par un canal de dérivation (34), qui est fermé dans ladite première position du boîtier de capteur d'images (10) et qui est ouvert dans ladite deuxième position du boîtier de capteur d'images (10).

9. Système de vision et de nettoyage de véhicule intégré embarqué selon l'une quelconque des revendications 1 à 7, **caractérisé en ce que** la buse de fluide (16) est intégrée dans un raccord (15a, b) destiné à raccorder une conduite de fluide de nettoyage (4), le raccord (15a, 15b) étant inséré dans une ouverture du caisson (11) ou le raccord (15a, b) faisant partie intégrante du caisson (11).

10. Système de vision et de nettoyage de véhicule intégré embarqué selon l'une quelconque des revendications 1 à 9, **caractérisé par** un moyen de purge destiné à purger le fluide de nettoyage en excès s'accumulant finalement sur le boîtier de capteur d'images (10).

11. Système de vision et de nettoyage de véhicule intégré embarqué selon l'une quelconque des revendications 1 à 10, **caractérisé par** au moins deux buses de fluide de nettoyage (16) disposées de façon également espacée à la périphérie du caisson (11).

12. Système de vision et de nettoyage de véhicule intégré embarqué selon l'une quelconque des revendications 1 à 11, **caractérisé en ce que** le boîtier de capteur d'images (10) comporte un dôme pour objectif (13) recouvrant ou constituant un objectif grandangulaire de l'unité de capteur d'images (6).
